# EUROPÄISCHE PATENTSCHRIFT

(11) **EP 4 196 712 B1**
(45) Veröffentlichungstag und Bekanntmachung des Hinweises auf die Patenterteilung: **17.07.2024**
(21) Anmeldenummer: 20817204.9
(22) Anmeldetag: 13.11.2020
(51) Int. Cl.: F16L 39/00, F16L 41/00, C21C 5/46, F16N 21/00

(54) **MULTIKUPPLUNG ZUM KUPPELN VON LEITUNGEN MIT EINER AUSRICHTHILFE**
MULTI-COUPLING FOR COUPLING LINES WITH AN ALIGNMENT AID
MULTI-COUPLAGE POUR COUPLER DES LIGNES AVEC UNE AIDE À L'ALIGNEMENT

(30) Priorität: 14.08.2020 AT 506842020
(43) Veröffentlichungstag der Anmeldung: 21.06.2023
(73) Patentinhaber: qoncept engineering GmbH, 8700 Leoben (AT)
(72) Erfinder: GLÖSSL, Christian, 8121 Deutschfeistritz (AT); RUMPLER, Heinz, 8700 Leoben (AT); MICHELIC, Sebastian, 8793 Trofaiach (AT)
(74) Vertreter: Hübscher & Partner Patentanwälte GmbH
(86) Internationale Anmeldenummer: PCT/AT2020/060402
(87) Internationale Veröffentlichungsnummer: WO 2022/032313

(56) Entgegenhaltungen:
- EP-A1- 3 608 577
- CN-A- 108 390 237
- DE-A1- 2 242 715
- SU-A1- 1 460 518
- US-A1- 2014 112 699

## Beschreibung

### Technisches Gebiet

Die Erfindung bezieht sich auf eine Multikupplung zum Kuppeln von Leitungen mit einer einem ersten Kupplungsteil, insbesondere einem Kupplungsstecker und einem zweiten Kupplungsteil, insbesonderer einer Kupplungsdose, zugeordneten Ausrichthilfe zum Ausgleichen von Versatztoleranzen beim Einfädeln des Kupplungssteckers in die Kupplungsdose.

### Stand der Technik

Multikupplungen kuppeln, also verbinden bzw. trennen, mehrere fluidische, pneumatische und/oder elektrische Leitungen gleichzeitig. Multikupplungen umfassen in der Regel eine Loshälfte und eine Festhälfte bzw. zwei Loshälften und bestehen aus Trägerplatten, Medienkupplungen, Elektroelementen, Führungselementen und gegebenenfalls zusätzlichen Bedienungs- und Verriegelungselementen. Die Multikupplung kann Gase, Flüssigkeiten, Strom und Signale kuppeln und trägt die untergeordneten Kuppelstellen für die genannten Medien. Eingesetzt können die Kupplungen unter nahezu allen Umweltbedingungen werden, vom Stahlwerk, in Industrie, Landwirtschaft und Verkehr sind vielseitige Einsatzmöglichkeiten gegeben.

Fluidkupplungen sind beispielsweise aus der FR 2667126 B1, der DE 10 2009 058 177 A1 und der DE 10 2012 023 392 A1 bekannt. Aus der DE 10 2009 058 177 A1 ist eine Vorrichtung zum Ankoppeln einer eine Schmierstoff-Gas-Strömung führenden Versorgungsleitung an eine Maschine bekannt, bei der mindestens eine Schmierstelle mittels des von der Schmierstoff-Gas-Strömung transportierten Schmierstoffs geschmiert wird, wobei die Vorrichtung einen an die Versorgungsleitung angeschlossenen von der Maschine weg und auf diese zu bewegbaren

Kupplungskopf und eine an der Maschine angeordnete Aufnahmeeinheit umfasst.

Aus der DE 22 42 715 A1 ist eine Vorrichtung zum Verbinden von Leitungen bekannt, bestehend aus einem ersten vorzugsweise hin- und herbewegbaren Kupplungsteil und einem zweiten vorzugsweise unbeweglichen Kupplungsteil, wobei das erste Kupplungsteil einen Rahmen aufweist, in dem ein erster Körper drehbar und federnd gelagert ist, wobei an dem ersten Körper mindestens ein Kupplungselement und ein Fürhungsbolzen sitzen, wobei das zweite Kupplungsteil aus einem zweiten Körper besteht, der drehbar und federn von Haltearmen gehalten wird, und wobei der zweite Körper eine Aufnahmeöffnung für den Führungsbolzen und mindestens ein Kupplungselement aufweist, das mit dem Kupplungselement des ersten Kupplungsteils zusammenwirkt.

Erfindungsgegenständliche Multikupplungen sind besonders robust und temperaturbeständig ausgeführt. Der Begriff Multikupplung soll darauf hinweisen, dass in der Vorrichtung mehrere Anschlüsse für technische Medien untergebracht sind. Eine erfindungsgemäße Multikupplung muss in der Lage sein, ein bewegliches oder bewegbares Objekt, z.B. eine Stahlpfanne in der Schwerindustrie, einen Transportwagen oder ein Fahrzeug, mit diversen technischen Medien (Gas, Flüssigkeit oder auch Strom) bzw. mit Signalen zu versorgen. Da sich das Objekt zwischen unterschiedlichen Punkten bewegen kann, ist eine herkömmliche Versorgung mit Versorgungsleitungen in der Praxis nicht umsetzbar. Es muss also gewährleistet werden, dass das Objekt an einer jeweiligen Arbeits- oder Parkposition rasch und sicher an etwaige Versorgungsleitungen angeschlossen werden kann.

### Darstellung der Erfindung

Der Erfindung liegt somit die Aufgabe zugrunde, eine Medienkupplung der eingangs geschilderten Art zu schaffen, die höchst fehlertolerant hinsichtlich Versatztoleranzen beim Kuppeln von einem ersten und einem zweiten Kupplungsteil, insbesondere von Kupplungsstecker und Kupplungsdose, ist und die unter erschwerten Einsatzbedingungen in der Industrie bei höheren Temperaturen, rauen Umgebungsbedingungen, sowie schwerer Staubbelastung ordnungsgemäß funktioniert und ein sicheres Ausrichten mehrerer, den Kupplungsteilen zugeordneter Medienkupplungen zueinander sicherstellt und um Beschädigungen der Medienkupplungen beim Kuppeln durch Überlast zu vermeiden.

Die Erfindung löst die gestellte Aufgabe durch eine Multikupplung nach Anspruch 1, insbesondere dadurch, dass ein Kupplungsteil einen quer zur Kupplungsrichtung schwimmend gelagerten Kupplungsträger aufweist, dass die Ausrichthilfe an einem Kupplungsteil einen von einem Kupplungsträger in Kupplungsrichtung vorragenden zentralen Vorzentrierzapfen und wenigstens einen vom Kupplungsträger in Kupplungsrichtung vorragenden, radial um die Vorzentrierzapfenachse angeordneten Feinzentrierzapfen aufweist, wobei der Feinzentrierzapfenkopf gegenüber dem Vorzentrierzapfenkopf in Kupplungsrichtung zurückversetzt ist und dass die Ausrichthilfe kupplungsdosenseitig ein zentrales Fangmaul aufweist, das in Kupplungsrichtung in eine Vorzentrierführung für den Vorzentrierzapfen übergeht und mit wenigstens einer um die Vorzentrierführungsachse angeordneten Feinzentrierführung für den Feinzentrierzapfen ausgestattet ist.. Gemäß dieser Ausgestaltungsvariante sind Vor- und Feinzentrierzapfen demselben Kupplungsteil zugeordnet.

Die Erfindung löst die gestellte Aufgabe aber auch durch eine Multikupplung nach Anspruch 2, insbesondere dadurch, dass Vor- und Feinzentrierzapfen je dem gegenüberliegenden anderen Kupplungsteil zugeordnet sind, also dadurch, dass ein Kupplungsteil einen quer zur Kupplungsrichtung schwimmend gelagerten Kupplungsträger aufweist, dass die Ausrichthilfe an einem Kupplungsteil einen von einem Kupplungsträger in Kupplungsrichtung vorragenden zentralen Vorzentrierzapfen und wenigstens eine um die Vorzentrierzapfenachse angeordnete Feinzentrierführung für einen Feinzentrierzapfen aufweist und dass die Ausrichthilfe am anderen Kupplungsteil ein zentrales Fangmaul und wenigstens einen vom Kupplungsträger in Kupplungsrichtung vorragenden, radial um das Fangmaul angeordneten Feinzentrierzapfen aufweist, wobei der Feinzentrierzapfenkopf weniger weit über den ihm zugeordneten Kupplungsträger vorragt als der Vorzentrierzapfenkopf vom ihm zugeordneten anderen Kupplungsträger und dass das zentrale Fangmaul in Kupplungsrichtung in eine Vorzentrierführung übergeht. Der Kupplungsträger ist vorzugsweise in Kupplungsrichtung federelastisch gelagert.

Mit der erfindungsgemäßen Multikupplung ist ein sicheres Ausrichten mehrerer, einem ersten und einem zweiten Kupplungsteil, beispielsweise Kupplungsstecker und Kupplungsdose, zugeordneter, Medienkupplungen zueinander sichergestellt, bevor eine Medienverbindung durch Kupplung der Medienkupplungen erfolgt. Vorzugsweise ist ein bewegbares Objekt mit einer starr montierten Kupplungsdose ausgerüstet. An einem feststehenden Versorgungspunkt ist vorzugsweise ein flexibler Kupplungsstecker montiert. Die Flexibilität des Kupplungssteckers ist durch den quer zur Kupplungsrichtung schwimmend gelagerten Kupplungsträger gegeben, der einem Ausgleich praxisgegebener Toleranzen beim Ankuppeln des Objekts an den ortsfesten Kupplungspunkt dient. Die Positionen von erstem und zweitem Kupplungsteil bzw. von Kupplungsstecker und Kupplungsdose sind allerdings gegenseitig austauschbar. Bei einer gegenseitigen Annäherung von Kupplungsstecker und Kupplungsdose wird der Vorzentrierzapfen vom Fangmaul eingefangen und bei fortgesetzte Annäherung in die Vorzentrierführung eingeführt, womit ein innerhalb der Einfangtoleranz liegender seitlicher Versatz zwischen Kupplungsstecker und Kupplungsdose ausgeglichen wird. Dazu weist der Vorzentrierzapfen insbesondere einen Kugel-, Pilz- oder Kegelkopf auf, der in einen Zylinderzapfen übergeht. Beim Einführen des Vorzentrierzapfens in die Vorzentrierführung werden also Kupplungsstecker und Kupplungsdose zunächst zumindest annähernd achsparallel ausgerichtet. In weiterer Folge gleiten drei radial um die Vorzentrierzapfenachse angeordnete Feinzentrierzapfen, deren Feinzentrierzapfenköpfe gegenüber dem Vorzentrierzapfenkopf in Kupplungsrichtung zurückversetzt sind vorzugsweise über kleinere Fangmäuler, insbesondere Zentrierkonusse, in die Feinzentrierführungen ein, womit eine Feinausrichtung hinsichtlich eines Achsversatzes und eines Drehversatzes zwischen Kupplungsstecker und Kupplungsdose zu einer Endposition hin erfolgt. Die Feinzentrierführungen können gegebenenfalls selbst Medienkupplungen aufweisen oder sein. Erst im Anschluss, erfolgt eine mechanische Verbindung der anderen Medienkupplungen. Vorzugsweise drei radial um die Vorzentrierzapfenachse angeordnete Feinzentrierzapfen erlauben eine besonders vorteilhafte Ausrichtung der Kupplungsteile, es würden allerdings auch einer, zwei oder gegebenenfalls mehrere die Funktion erfüllen.

Folgende Kupplungsarten sind ohne Anspruch auf Vollständigkeit beispielsweise denkbar. Ein selbsttätiges Kuppeln durch Zusammenführen der Objekte, insbesondere durch vertikales oder schräges Aufsetzen mittels Hebezeug, wie Kran, Schrägaufzug od. dgl., wobei die für den Kupplungsvorgang erforderliche Kraft schwerkraftbedingt, also durch die Masse des herangeführten Objektes aufgebracht wird. Ein Kuppeln in annähernd horizontaler Richtung im Zuge einer Bewegung eines Fahrzeuges zu einer Anschlagposition. Ein selbsttätiges Kuppeln durch Zusammenführen zweier bewegter Objekte in beliebiger Richtung, z.B. ein aneinanderkuppeln zweier Wagen. Eine Bewegungssteuerung für einen minimalen Anfahrstoß wird vorausgesetzt. Auch ein gezwungenes Zusammenführen eines oder beider Kupplungsteile durch zusätzliche Aktoren z.B. Ankuppeln eines Fahrzeuges in einer Parkposition (Betankung, elektr. Energieversorgung,...) bzw. ein Ankuppeln einer Vorrichtung und Mitfahren über eine bestimmte Strecke zur Versorgung von verfahrensspezifischen Fluiden, Gasen, Elektrik, Messtechnik ist möglich.

Die Verbindung wird hergestellt indem Kupplungsstecker und Kupplungsdose aufeinander zubewegt werden und ein bewegtes Objekt auf einer zugewiesenen Toleranzposition abgestellt wird oder verharrt. Die Multikupplung kann gleichermaßen mit horizontaler wie Vertikaler bzw. beliebig ausgerichteter Kupplungsachse ausgeführt sein.

Um eine großzügige Versatztoleranz zu gestatten ist - nach der Erfindungder Kupplungsträger bezüglich einer Trägerbasis quer zur Kupplungsrichtung schwimmend gelagert, wozu zwischen Kupplungsträger und Trägerbasis wenigstens eine Feder angeordnet ist, die mittels einerends am Kupplungsträger und andernends an der Trägerbasis angreifender Zugmittel vorgespannt ist. Bilden der Kupplungsträger, die quer zur Kupplungsrichtung schwimmend gelagerte Trägerbasis und die Zugmittel eine Art Gelenkparallelogramm zur zumindest annähernd achsparallelen Ausrichtung der Kupplungsteile beim Kuppeln von Leitungen, bleiben beide Kupplungsteile im Zuge eines Kupplungsprozesses zumindest annähernd achsparallel, womit das Zusammenführen der Kupplungen erleichtert wird.

Besonders bevorzugt ist zwischen Kupplungsträger und Trägerbasis wenigstens eine Feder, insbesondere sind drei sternförmig um die Kupplungslängsachse angeordnete Federn, vorzugsweise Schraubenfedern, angeordnet. Damit kann bei ordnungsgemäßer Dimensionierung durch das Zusammenspiel zwischen Federn und Zugmittel sichergestellt werden, dass der Kupplungsträger bei einem seitlichen Ausrichten im Zuge der Vorzentrierung zumindest annähernd planparallel zur Trägerbasis geführt wird, womit der Verschleiß geringgehalten und die Leichtgängigkeit der Kupplung verbessert wird. Verbindungsleitungen zwischen den dem Kupplungsträger zugeordneten Medienleitungen und einer Medienquelle können vorteilhaft in und/oder zwischen den Federn geführt werden. Die Zugmittel dienen einer Vorspannung der Federn sodass die Feder bei einer Querbewegung zwischen Kupplungsträger und Trägerbasis eine S-Form ausbildet und damit der Kupplungsträger annähernd achsparallel zur Trägerbasis bleibt.

Die Federvorspannkraft ist mittels der Zugmittel, Seile od. dgl., innerhalb des Konnektors in Abhängigkeit der technischen Erfordernisse für die zu übertragenden Medien einstellbar. Eine Arretierung für die Übertragung höhere Drücke, bzw. Schließkräfte kann im Falle unzureichender Federkraft vorgesehen sein. Die wenigstens eine Feder bewirkt eine Verminderung der auf Kupplungen und Anschlusskonstruktionen einwirkenden Kräfte. Auf die Anschlusskonstruktion der Kupplung wirkt nur die Federkraft aus dem Kupplungsstecker. Stoßbelastungen bzw. überdurchschnittliche auf die Multikupplung einwirkende Kräfte werden vermieden.

Die spezielle Federtechnik im Kupplungsstecker erlaubt große Versatztoleranzen während des Kuppelvorganges und in gekoppelter Stellung. Die im Kupplungsstecker eingebauten Federn weisen eine hohe Flexibilität auf, wodurch eine Parallelität zwischen Kupplungsstecker und Kupplungsdose am Ende des Kuppelvorgangs sichergestellt werden kann. Dies wird durch ein spezielles Federpaket oder durch eine Einzelfeder ermöglicht, die an beiden Enden, einerends am Kupplungsträger und andernends an der Trägerbasis, eingespannte Feder beschreibt bei entsprechendem Versatz zwischen Kupplungsstecker und Kupplungsdose eine "S"-Form. Mit drei Federn wird ein statisch definiertes Dreipunktauflager geschaffen. Diese Konstruktion stellt sicher, dass alle Kontaktflächen parallel und koaxial zu einander geführt werden.

Der Vorzentrierzapfen kann gegebenenfalls selbst eine Medienkupplung oder einen Aktuator ausbilden. Dabei muss die Gegenkupplung in der Vorzentrierführung derart vertieft eingebaut sein, dass eine Kupplung erst nach erfolgter Ausrichtung von Kupplungsstecker und Kupplungsdose erfolgt. Gleichermaßen kann wenigstens ein Feinzentrierzapfen selbst eine Medienkupplung oder einen Aktuator ausbilden.

Um eine große Anzahl an Medienkupplungen auf geringer Fläche anordnen zu können, kann der Kupplungsträger mehrere, insbesondere sternförmig bzw. auf einer Kreisbahn, um die Vorzentrierzapfenachse angeordnete Medienkupplungen aufnehmen. Damit wird ein Baukastensystem geschaffen, mit dem je nach Anforderung entsprechende Medienkupplungen konfiguriert werden. Die Modularität bei Kupplungen mit dieser Flexibilität ist einzigartig. An Stelle von Mediankupplungen können auch Aktuatoren vorgesehen sein.

Um Verspannungen im System zu vermeiden können Medienkupplungen im Kupplungsträger quer zur Kupplungsrichtung schwimmend gelagert sein.

Der Kupplungsstecker einer erfindungsgemäßen Multikupplung umfasst einen von einem quer zur Kupplungsrichtung schwimmend gelagerten und in Kupplungsrichtung federelastisch gelagerten Kupplungsträger des Kupplungssteckers in Kupplungsrichtung vorragenden zentralen Vorzentrierzapfen und drei vom Kupplungsträger in Kupplungsrichtung vorragende radial um die Vorzentrierzapfenachse angeordnete Feinzentrierzapfen, wobei die Feinzentrierzapfenköpfe gegenüber dem Vorzentrierzapfenkopf in Kupplungsrichtung zurückversetzt sind und durch mehrere sternförmig um die Vorzentrierzapfenachse angeordnete Medienkupplungen.

Die Kupplungsdose einer erfindungsgemäßen Multikupplung umfasst ein zentrales Fangmaul, das in Kupplungsrichtung in eine Vorzentrierführung übergeht, durch drei um die Vorzentrierführungsachse sternförmig angeordnete Feinzentrierführungen und durch mehrere sternförmig um die Vorzentrierführungsachse angeordnete Medienkupplungen.

Um besondere Versatztoleranzen ausgleichen zu können, ist es gegebenenfalls von Vorteil, wenn beide Kupplungsteile einen quer zur Kupplungsrichtung schwimmend gelagerten Kupplungsträger aufweisen. Vorzentrierung und Feinzentrierung können dem jeweilig anderen Kupplungsteil zugeordnet sein. Auch Aktoren können in den Kupplungsteilen integriert sein.

Jeder Kupplungsteil, also insbesondere Kupplungsstecker und Kupplungsdose, kann mit Aktoren, beispielsweise einem Linearzylinder bzw. Drehantrieb, für das Zusammenführen bzw. Zusammenziehen von Kupplungsstecker und Kupplungsdose ausgestattet sein. Damit kann auch für eine Verriegelung der Multikupplung bei ordnungsgemäß an die Kupplungsdose angeschlossenem Kupplungsstecker gesorgt werden. Ebenso kann der Vorzentrierzapfen bzw. können die Feinzentrierzapfen selbst entsprechende Aktoren aufweisen oder sein.

### Kurze Beschreibung der Erfindung

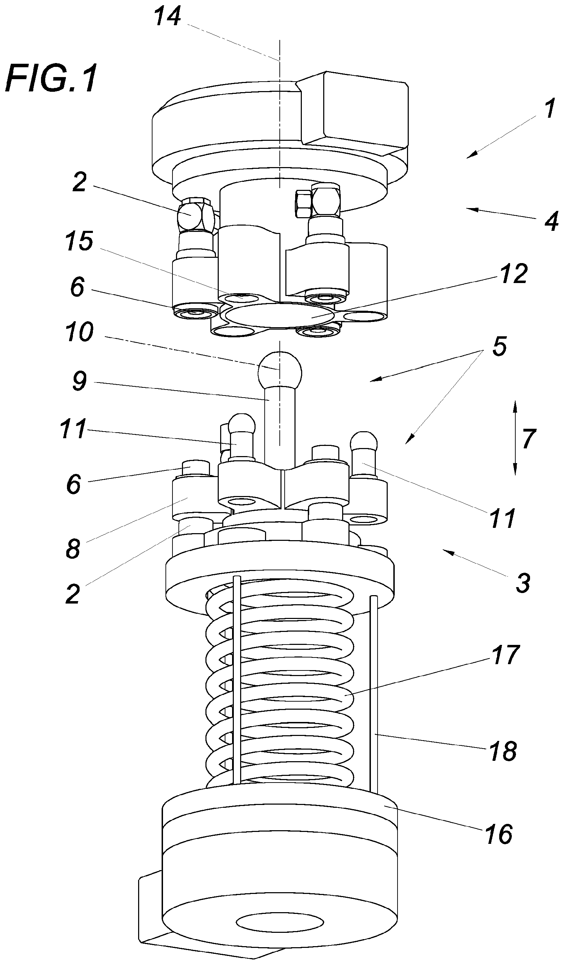

In der Zeichnung ist der Erfindungsgegenstand beispielsweise dargestellt. Es zeigen
- Fig. 1: eine entkuppelte Multikupplung in Schrägansicht,

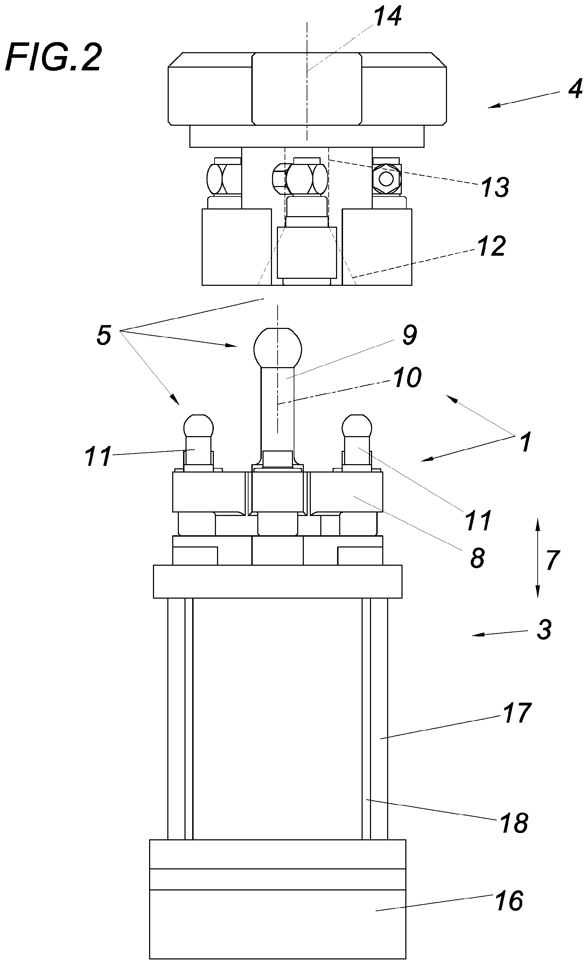

- Fig. 2: eine entkuppelte Multikupplung in Seitenansicht mit einem seitlichen Versatz zwischen Kupplungsstecker und Kupplungsdose,

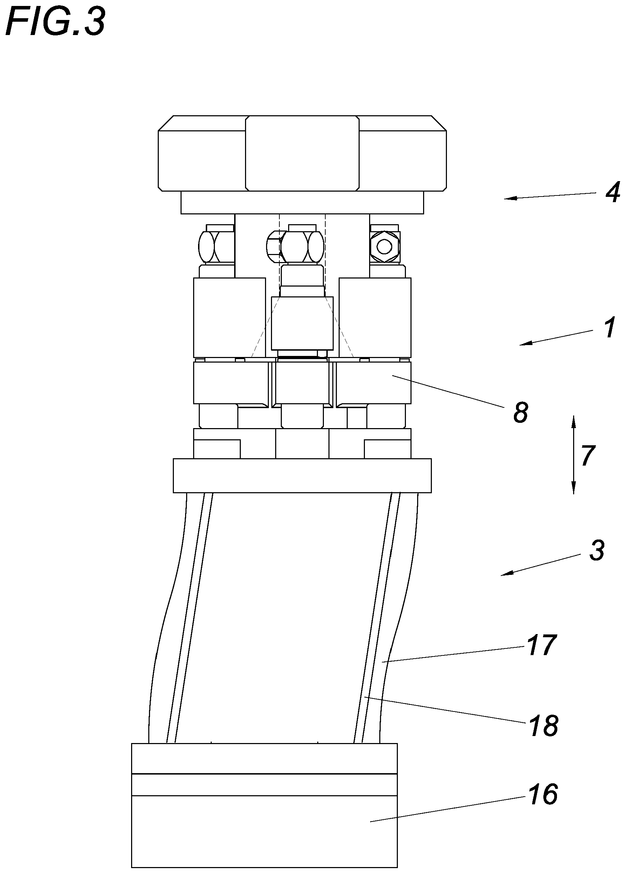

- Fig. 3: die gekuppelte Multikupplung aus Fig. 2,
- Fig. 4: eine Konstruktionsvariante einer Multikupplung aus Fig. 1 in Schrägansicht,

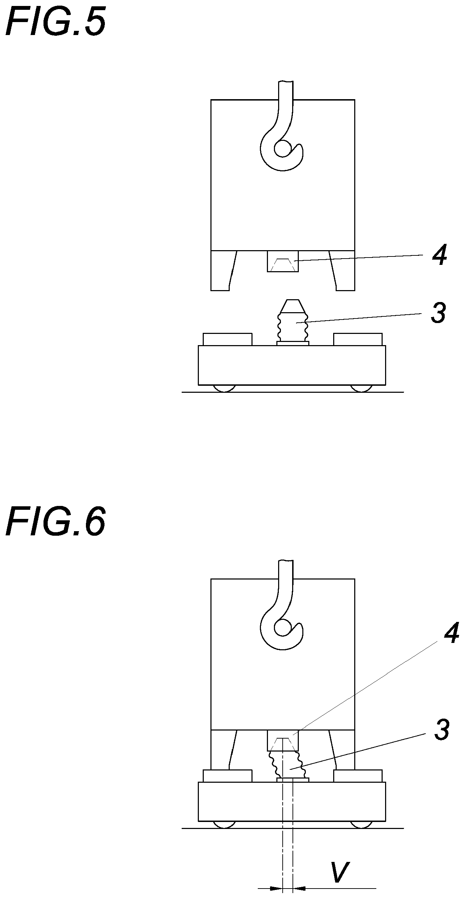

- Fig. 5: ein Objekt mit entkuppelter Multikupplung in Seitenansicht,
- Fig. 6: das auf einen Wagen abgestellte und gekuppelte Objekt aus Fig. 4,
- Fig. 7: ein Fahrzeug mit entkuppelter Multikupplung in Seitenansicht und
- Fig. 8: das über die Multikupplung an eine Ladestation gekuppelte Fahrzeug aus

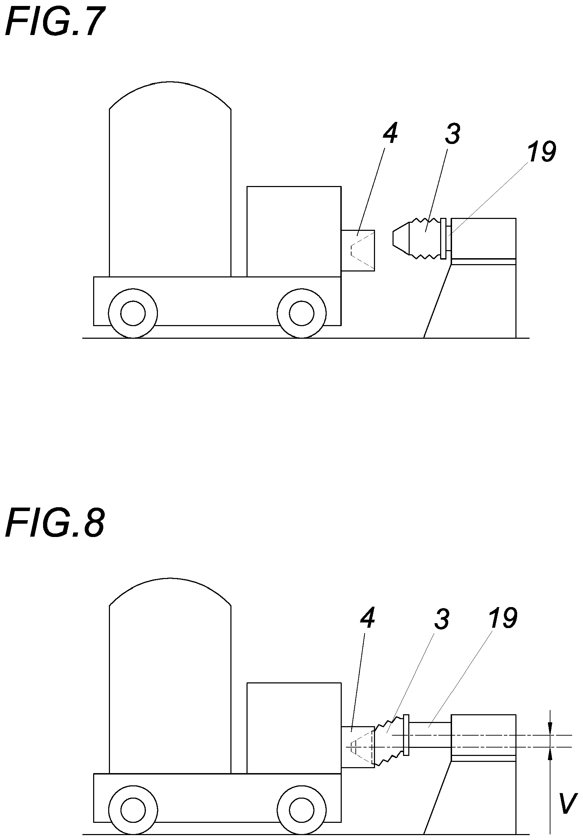

- Fig. 7: mit ausgefahrenem Linearaktor.

### Wege zur Ausführung der Erfindung

Die Multikupplung 1 zum Kuppeln von Leitungen 2 umfasste eine einem ersten Kupplungsteil 3, hier einem Kupplungsstecker, und einem zweiten Kupplungsteil 4, hier einer Kupplungsdose, zugeordnete Ausrichthilfe 5 zum Ausgleichen von Versatztoleranzen beim Einfädeln des ersten Kupplungsteils 3 in den zweiten Kupplungsteil 4 beim Kuppeln von Medienkupplungen 6.

Die Ausrichthilfe 5 weist kupplungssteckerseitig einen von einem quer zur Kupplungsrichtung 7 schwimmend gelagerten Kupplungsträger 8 des ersten Kupplungsteils 3 in Kupplungsrichtung 7 gegen die zweiten Kupplungsteil 4 vorragenden zentralen Vorzentrierzapfen 9 und drei vom Kupplungsträger 8 in Kupplungsrichtung 7 vorragende radial um die Vorzentrierzapfenachse 10 angeordnete Feinzentrierzapfen 11 auf. Die Kupplungsrichtung 7 ist mit einem Doppelpfeil gekennzeichnet, da sowohl das erste zum zweiten Kupplungsteil, das zweite zum ersten Kupplungsteil als auch beide Kupplungsteile zum Kuppeln zueinander bewegt werden können. Die kugelförmigen Feinzentrierzapfenköpfe sind gegenüber dem kugelförmigen Vorzentrierzapfenkopf in Kupplungsrichtung 7 zurückversetzt. Zudem umfasst die Ausrichthilfe 5 kupplungsdosenseitig ein zentrales Fangmaul 12 aufweist, das in Kupplungsrichtung 7 in eine Vorzentrierführung 13 übergeht und mit drei um die Vorzentrierführungsachse 14 angeordneten Feinzentrierführungen 15 ausgestattet ist. Die Aufnahmeöffnungen von Feinzentrierführungen 15 und Fangmaul 12 liegen hier beispielsweise in einer nicht notwendigerweise gemeinsamen Ebene an einem kupplungsdosenseitigen Kupplungsträger.

Der Kupplungsträger 8 ist bezüglich einer Trägerbasis 16 quer zur Kupplungsrichtung 7 schwimmend gelagert, wozu zwischen Kupplungsträger 8 und Trägerbasis 16 eine um die Vorzentrierzapfenachse 10 angeordnete Schraubenfeder 17 angeordnet ist, das mittels einerends am Kupplungsträger 8 und andernends an der Trägerbasis 16 angreifender Zugmittel 18 vorgespannt ist.

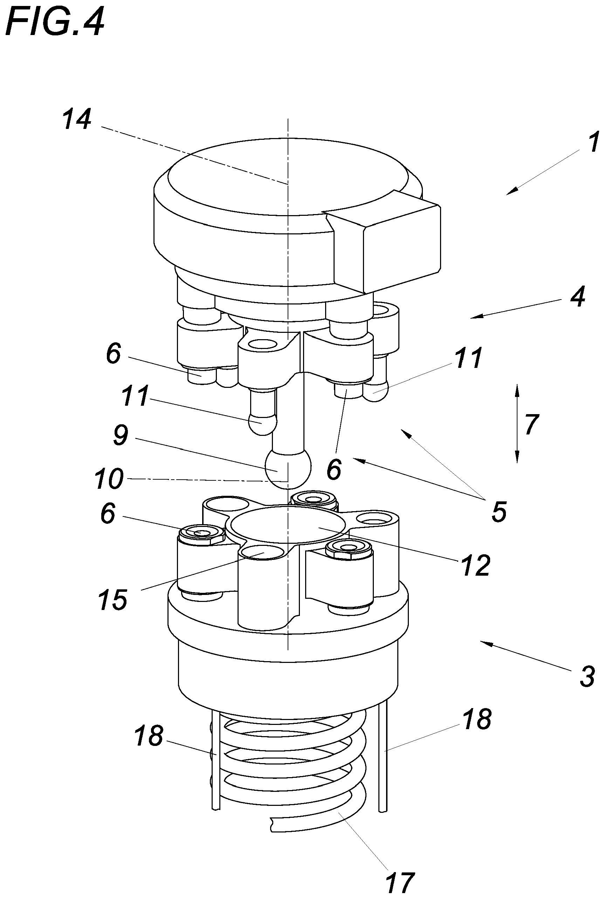

Im Ausführungsbeispiel nach Fig. 4 sind der Vorzentrierzapfen 9 und die Feinzentrierzapfen 11 dem zweiten Kupplungsteil 4 zugeordnet und sind Fangmaul 12 und Feinzentrierführungen 15 dem quer zur Kupplungsrichtung 7 schwimmend gelagerten ersten Kupplungsteil 3 zugeordnet.

Der Vorzentrierzapfen 9 kann ebenso wie die Feinzentrierzapfen 11 selbst eine Medienkupplung ausbilden. Der Kupplungsträger 8 nimmt mehrere sternförmig um die Vorzentrierzapfenachse 10 angeordnete Medienkupplungen 6 auf. Im Kupplungsträger 8 sind Medienkupplungen 6 quer zur Kupplungsrichtung schwimmend gelagert.

Eine entkuppelte Multikupplung kann auch mit einem seitlichen Versatz V zwischen erstem und zweitem Kupplungsteil ordnungsgemäß gekuppelt werden.

Im Ausführungsbeispiel nach Fig. 7 und 8 wird der erste Kupplungsteil 3 mittels eines Linearaktuators 19 zum zweiten Kupplungsteil 4 bewegt. Der Versatz V zeigt den selbsttätigen Ausgleich bei einer Abweichung quer zur Kupplungsrichtung. Ebenso werden durch die federelastische Bauweise Abweichungen in axialer Richtung ausgeglichen.

## Patentansprüche

1. Multikupplung (1) zum Kuppeln von Leitungen (2) mit einer einem ersten Kupplungsteil (3), nämlich einem Kupplungsstecker, und einem zweiten Kupplungsteil (4), nämlich einer Kupplungsdose, zugeordneten Ausrichthilfe (5) zum Ausgleichen von Versatztoleranzen beim Einfädeln des ersten Kupplungsteils (3) in den zweiten Kupplungsteil (4) beim Kuppeln von Medienkupplungen (6), wobei die Kupplungsteile (3,4) je einen Kupplungsträger aufweisen, wobei der Kupplungsträger (8) wenigstens eines der Kupplungsteile (3,4) bezüglich einer Trägerbasis (16) quer zur Kupplungsrichtung (7) schwimmend gelagert ist, wozu zwischen dem schwimmend gelagerten Kupplungsträger (8) und der Trägerbasis (16) wenigstens eine Feder (17) angeordnet ist, wobei die Ausrichthilfe (5) an einem der Kupplungsteile (3,4) einen von dessen Kupplungsträger in Kupplungsrichtung (7) vorragenden zentralen Vorzentrierzapfen (9) und wenigstens einen von dessen Kupplungsträger in Kupplungsrichtung (7) vorragenden, radial um die Vorzentrierzapfenachse (10) angeordneten Feinzentrierzapfen (11) aufweist, wobei ein Feinzentrierzapfenkopf des Feinzentrierzapfens (11) gegenüber einem Vorzentrierzapfenkopf des Vorzentrierzapfens (9) in Kupplungsrichtung (7) zurückversetzt ist und wobei die Ausrichthilfe (5) kupplungsdosenseitig ein zentrales Fangmaul (12) aufweist, das in Kupplungsrichtung (7) in eine Vorzentrierführung (13) für den Vorzentrierzapfen (9) übergeht und mit wenigstens einer um die Vorzentrierführungsachse (14) angeordneten Feinzentrierführung (15) für den Feinzentrierzapfen (11) ausgestattet ist, **dadurch gekennzeichnet, dass** die Feder (17) mittels einerends am schwimmend gelagerten Kupplungsträger (8) und andernends an der Trägerbasis (16) angreifender Zugmittel (18) vorgespannt ist.

2. Multikupplung (1) zum Kuppeln von Leitungen (2) mit einer einem ersten Kupplungsteil (3) und einem zweiten Kupplungsteil (4) zugeordneten Ausrichthilfe (5) zum Ausgleichen von Versatztoleranzen beim Einfädeln des ersten Kupplungsteils (3) in den zweiten Kupplungsteil (4) beim Kuppeln von Medienkupplungen (6), wobei die Kupplungsteile (3,4) je einen Kupplungsträger aufweisen, wobei einer der Kupplungsteile (3,4) einen bezüglich einer Trägerbasis (16) quer zur Kupplungsrichtung (7) schwimmend gelagerten Kupplungsträger (8) aufweist, wozu zwischen dem schwimmend gelagerten Kupplungsträger (18) und der Trägerbasis (16) wenigstens eine Feder (17) angeordnet ist, wobei die Ausrichthilfe (5) an einem der Kupplungsteile (3,4) einen von dessen Kupplungsträger in Kupplungsrichtung (7) vorragenden zentralen Vorzentrierzapfen (9) und wenigstens eine um die Vorzentrierzapfenachse angeordnete Feinzentrierführung (15) für einen Feinzentrierzapfen (11) aufweist und wobei die Ausrichthilfe (5) am anderen Kupplungsteil ein zentrales Fangmaul (12) und wenigstens einen von dessen Kupplungsträger in Kupplungsrichtung (7) vorragenden, radial um das Fangmaul (12) angeordneten Feinzentrierzapfen (11) aufweist, wobei ein Feinzentrierzapfenkopf des Feinzentrierzapfens (11) weniger weit über den ihm zugeordneten Kupplungsträger vorragt als ein Vorzentrierzapfenkopf des Vorzentrierzapfens (9) vom ihm zugeordneten anderen Kupplungsträger und wobei das zentrale Fangmaul (12) in Kupplungsrichtung (7) in eine Vorzentrierführung (13) übergeht, wobei die Feder (17) mittels einerends am Kupplungsträger (8) und andernends an der Trägerbasis (16) angreifender Zugmittel (18) vorgespannt ist.

3. Multikupplung nach Anspruch 1 oder 2, **dadurch gekennzeichnet, dass** der quer zur Kupplungsrichtung (7) schwimmend gelagerte Kupplungsträger (8), die quer zur Kupplungsrichtung (7) schwimmend gelagerte Trägerbasis (16) und die Zugmittel (18) eine Art Gelenkparallelogramm zur zumindest annähernd achsparallelen Ausrichtung der Kupplungsteile (3, 4) beim Kuppeln von Leitungen (2) bilden.

4. Multikupplung nach Anspruch 3, **dadurch gekennzeichnet, dass** insbesondere drei sternförmig um die Kupplungslängsachse angeordnete Federn vorgesehen sind, wobei die Federn vorzugsweise Schraubenfedern (17) sind.

5. Multikupplung nach einem der Ansprüche 1 bis 4, **dadurch gekennzeichnet, dass** der Vorzentrierzapfen (9) selbst eine Medienkupplung (6) oder einen Aktuator ausbildet.

6. Multikupplung nach einem der Ansprüche 1 bis 5, **dadurch gekennzeichnet, dass** wenigstens ein Feinzentrierzapfen (11) selbst eine Medienkupplung (6) oder einen Aktuator ausbildet.

7. Multikupplung nach einem der Ansprüche 1 bis 6, **dadurch gekennzeichnet, dass** der Kupplungsträger (8) mehrere, insbesondere sternförmig, um die Vorzentrierzapfenachse (10) angeordnete Medienkupplungen (6) aufnimmt.

8. Multikupplung nach einem der Ansprüche 1 bis 7, **dadurch gekennzeichnet, dass** im Kupplungsträger (8) Medienkupplungen (6) quer zur Kupplungsrichtung (7) schwimmend gelagert sind.

9. Multikupplung (1) nach einem der Ansprüche 1 und 3 bis 8, der Kupplungsstecker aufweisend den vom quer zur Kupplungsrichtung (7) schwimmend gelagerten Kupplungsträger (8) des Kupplungssteckers (3) in Kupplungsrichtung (7) vorragenden zentralen Vorzentrierzapfen (9) und drei vom Kupplungsträger (8) in Kupplungsrichtung (7) vorragende radial um die Vorzentrierzapfenachse (10) angeordnete Feinzentrierzapfen (11), wobei die Feinzentrierzapfenköpfe gegenüber dem Vorzentrierzapfenkopf in Kupplungsrichtung (7) zurückversetzt sind und aufweisend mehrere sternförmig um die Vorzentrierzapfenachse (10) angeordnete Medienkupplungen (6).

10. Multikupplung nach einem der Ansprüche 1 und 3 bis 8, die Kupplungsdose aufweisend das zentrale Fangmaul (12), das in Kupplungsrichtung (7) in eine Vorzentrierführung (13) übergeht, aufweisend drei um die Vorzentrierführungsachse (14) sternförmig angeordnete Feinzentrierführungen (15) und aufweisend mehrere sternförmig um die Vorzentrierführungsachse (14) angeordnete Medienkupplungen (6).

## Claims

1. Multi-coupling (1) for coupling lines (2) with an alignment aid (5) assigned to a first coupling part (3), namely a coupling plug, and a second coupling part (4), namely a coupling socket, for compensating misalignment tolerances when threading the first coupling part (3) into the second coupling part (4) when coupling media couplings (6), wherein the coupling parts (3, 4) each have a coupling carrier, wherein the coupling carrier (8) of at least one of the coupling parts (3,4) is mounted floatingly with respect to a carrier base (16) transversely to the coupling direction (7), for which purpose at least one spring (17) is arranged between the floatingly mounted coupling carrier (8) and the carrier base (16), whereby the alignment aid (5) on one of the coupling parts (3, 4) has a central pre-centering pin (9) projecting from the coupling carrier thereof in the coupling direction (7) and at least one fine centering pin (11) projecting from the coupling carrier thereof in the coupling direction (7) and arranged radially around the pre-centering pin axis (10), wherein a fine centering pin head of the fine centering pin (11) is set back relative to a pre-centering pin head of the pre-centering pin (9) in the coupling direction (7) and wherein the alignment aid (5) has a central catching mouth (12) on the coupling socket side, which central catching mouth (12) merges in the coupling direction (7) into a pre-centering guide (13) for the pre-centering pin (9) and is equipped with at least one fine-centering guide (15) arranged around the pre-centering guide axis (14) for the fine-centering pin (11), **characterized in that** the spring (17) is pretensioned by means of tensioning means (18) engaging at one end on the floatingly mounted coupling carrier (8) and at the other end on the carrier base (16).

2. Multi-coupling (1) for coupling lines (2) with an alignment aid (5) assigned to a first coupling part (3) and a second coupling part (4) for compensating misalignment tolerances when threading the first coupling part (3) into the second coupling part (4) when coupling media couplings (6), wherein the coupling parts (3, 4) each have a coupling carrier, wherein one of the coupling parts (3, 4) has a coupling carrier (8) floatingly mounted transversely to the coupling direction (7) with respect to a carrier base (16), for which purpose at least one spring (17) is arranged between the floatingly mounted coupling carrier (8) and the carrier base (16), wherein the alignment aid (5) on one of the coupling parts (3, 4) has a central pre-centering pin (9) projecting from the coupling carrier thereof in the coupling direction (7) and at least one fine centering guide (15) arranged about the pre-centering pin axis for a fine centering pin (11), and wherein the alignment aid (5) on the other coupling part has a central catching mouth (12) and at least one fine centering pin (11) projecting from the coupling carrier thereof in the coupling direction (7) and arranged radially around the central catching mouth (12), wherein a fine centering pin head of the fine centering pin (11) projects less far beyond the coupling carrier assigned to it than a pre-centering pin head of the pre-centering pin (9) projects from the other coupling carrier assigned to it and wherein the central catching mouth (12) merges into a pre-centering guide (13) in the coupling direction (7), wherein the spring (17) is pretensioned by means of tensioning means (18) engaging at one end on the coupling carrier (8) and at the other end on the carrier base (16).

3. Multi-coupling according to claim 1 or 2, **characterized in that** the coupling carrier (8), which is floatingly mounted transversely to the coupling direction (7), the carrier base (16), which is floatingly mounted transversely to the coupling direction (7), and the tensioning means (18) form a type of joint parallelogram for at least approximately axially parallel alignment of the coupling parts (3, 4) when coupling lines (2).

4. Multi-coupling according to claim 3, **characterized in that**, in particular, three springs arranged in a star shape around the longitudinal axis of the coupling are provided, the springs preferably being helical springs (17).

5. Multi-coupling according to one of claims 1 to 4, **characterized in that** the pre-centering pin (9) itself forms a media coupling (6) or an actuator.

6. Multi-coupling according to one of claims 1 to 5, **characterized in that** at least one fine centering pin (11) itself forms a media coupling (6) or an actuator.

7. Multi-coupling according to one of claims 1 to 6, **characterized in that** the coupling carrier (8) accommodates a plurality of media couplings (6) arranged, in particular in a star shape, around the pre-centering pin axis (10).

8. Multi-coupling according to one of claims 1 to 7, **characterized in that** media couplings (6) are floatingly mounted in the coupling carrier (8) transversely to the coupling direction (7).

9. Multi-coupling (1) according to one of claims 1 and 3 to 8, the coupling plug having the central pre-centering pin (9) projecting in the coupling direction (7) from the coupling carrier (8) of the coupling plug (3), which coupling carrier (8) is floatingly mounted transversely to the coupling direction (7), and three fine centering pins (11) arranged radially around the pre-centering pin axis (10) and projecting from the coupling carrier (8) in the coupling direction (7), wherein the fine centering pin heads are set back relative to the pre-centering pin head in the coupling direction (7) and having a plurality of media couplings (6) arranged in a star shape around the pre-centering pin axis (10).

10. Multi-coupling according to one of claims 1 and 3 to 8, the coupling socket having the central catching mouth (12), which merges into a pre-centering guide (13) in the coupling direction (7), having three fine centering guides (15) arranged in a star shape around the pre-centering guide axis (14) and having a plurality of media couplings (6) arranged in a star shape around the pre-centering guide axis (14).

## Revendications

1. Multi-coupleur (1) pour le couplage de conduites (2) doté d'un moyen d'aide à l'alignement (5) associé à un premier élément de couplage (3), à savoir une fiche de couplage, et à un deuxième élément de couplage (4), à savoir une prise de couplage, pour compenser les tolérances d'alignement lors de l'engagement du premier élément de couplage (3) dans le deuxième élément de couplage (4) lors du couplage de coupleurs de fluide (6), les éléments de couplage (3, 4) comportant chacun un support de couplage, lequel support de couplage (8) d'au moins un des éléments de couplage (3, 4) est monté de manière flottante par rapport à une base de support (16) perpendiculairement à la direction de couplage (7), au moins un ressort (17) étant agencé entre le support de couplage (8) monté de manière flottante et la base de support (16), le moyen d'aide à l'alignement (5) comportant au niveau d'un des éléments de couplage (3, 4) un tenon de précentrage (9) saillant de son support de couplage dans la direction de couplage (7) et au moins un tenon de centrage fin (11) saillant de son support de couplage dans la direction de couplage (7) et disposé radialement autour de l'axe du tenon de précentrage (10), une tête de tenon de centrage fin du tenon de centrage fin (11) étant reculée dans la direction de couplage (7) par rapport à la tête de tenon de précentrage du tenon de précentrage (9), et le moyen d'aide à l'alignement (5) comportant du côté de la prise de couplage un pavillon (12) qui se prolonge dans la direction de couplage (7) par un guide de précentrage (13) destiné au tenon de précentrage (9) et est équipé d'au moins un guide de centrage fin (15) destiné au tenon de centrage fin (11) disposé autour de l'axe de guidage de précentrage (14), **caractérisé en ce que** le ressort (17) est prétendu au moyen de moyens de traction (18) s'agrippant, à une extrémité, au support de couplage (8) monté de manière flottante et, à l'autre extrémité, à la base de support (16).

2. Multi-coupleur (1) pour le couplage de conduites (2) doté d'un moyen d'aide à l'alignement (5) associé à un premier élément de couplage (3) et à un deuxième élément de couplage (4) pour compenser les tolérances d'alignement lors de l'engagement du premier élément de couplage (3) dans le deuxième élément de couplage (4) lors du couplage de coupleurs de fluide (6), un des éléments de couplage (3, 4) comportant un support de couplage (8) monté de manière flottante par rapport à une base de support (16) perpendiculairement à la direction de couplage (7), au moins un ressort (17) étant agencé entre le support de couplage (8) monté de manière flottante et la base de support (16), le moyen d'aide à l'alignement (5) comportant au niveau d'un des éléments de couplage (3, 4) un tenon de précentrage (9) saillant de son support de couplage dans la direction de couplage (7) et au moins un guide de tenon de centrage fin (15) disposé autour de l'axe du tenon de précentrage pour un tenon de centrage fin (11) et le moyen d'aide à l'alignement (5) comportant au niveau de l'autre élément de couplage un pavillon central (12) et au moins un tenon de centrage fin (11) saillant de son support de couplage dans la direction de couplage (7) et disposé radialement autour du pavillon (12), une tête de tenon de centrage fin du tenon de centrage fin (11) saillant moins loin au-delà du support de couplage qui lui est associé qu'une tête de tenon de précentrage du tenon de précentrage (9) de l'autre support de couplage qui lui est associé, et le ressort (17) étant prétendu au moyen de moyens de traction (18) s'agrippant, à une extrémité, au support de couplage (8) et, à l'autre extrémité, à la base de support (16).

3. Multi-coupleur selon la revendication 1 ou 2, **caractérisé en ce que** le support de couplage (8) monté de manière flottante perpendiculairement à la direction de couplage (7), la base de support (16) montée de manière flottante perpendiculairement à la direction de couplage (7) et les moyens de traction (18) forment une sorte de parallélogramme articulé par rapport à l'orientation au moins approximativement axialement parallèle des éléments de couplage (3, 4) lors du couplage de conduites (2).

4. Multi-coupleur selon la revendication 3, **caractérisé en ce que** sont prévus en particulier trois ressorts disposés en étoile autour de l'axe longitudinal de couplage, ces ressorts étant de préférence des ressorts hélicoïdaux (17).

5. Multi-coupleur selon une des revendications 1 à 4, **caractérisé en ce que** le tenon de précentrage (9) constitue lui-même un coupleur de fluide (6) ou un actionneur.

6. Multi-coupleur selon une des revendications 1 à 5, **caractérisé en ce qu'**au moins un tenon de centrage fin (11) constitue lui-même un coupleur de fluide (6) ou un actionneur.

7. Multi-coupleur selon une des revendications 1 à 6, **caractérisé en ce que** le support de couplage (8) accueille plusieurs coupleurs de fluide (6) disposés, en particulier en étoile, autour de l'axe de tenon de précentrage (10).

8. Multi-coupleur selon une des revendications 1 à 7, **caractérisé en ce que** des coupleurs de fluide (6) sont montés de façon flottante perpendiculairement à la direction de couplage (7) dans le support de couplage (8).

9. Multi-coupleur selon une des revendications 1 et 3 à 8, la fiche de couplage comportant le tenon de précentrage central (9) saillant dans la direction de couplage (7) du support de couplage (8) de la fiche de couplage (3) monté de façon flottante perpendiculairement à la direction de couplage (7) et trois tenons de centrage fin (11) saillant du support de couplage (8) dans la direction de couplage (7) et disposés radialement autour de l'axe de tenon de précentrage (10), les têtes de tenon de centrage fin étant reculées dans la direction de couplage (7) par rapport à la tête de tenon de précentrage et comportant plusieurs coupleurs de fluide (6) disposés en étoile autour de l'axe de tenon de précentrage (10).

10. Multi-coupleur selon une des revendications 1 et 3 à 8, la prise de couplage comportant le pavillon central (12) qui se prolonge dans la direction de couplage (7) par un guide de précentrage (13), comportant trois guides de centrage fin (15) disposés en étoile autour de l'axe de guidage de précentrage (14) et comportant plusieurs coupleurs de fluide (6) disposés en étoile autour de l'axe de guidage de précentrage (14).
